# EUROPEAN PATENT APPLICATION

(11) **EP 4 226 775 A1**
(43) Date of publication of application: **16.08.2023**
(21) Application number: 22166059.0
(22) Date of filing: 31.03.2022
(51) Int. Cl.: A23L 27/00, A47G 19/00, C12G 3/06

(54) **CARRIER SET FOR WINE TASTING, WINE TASTING CARRIER, AND PRODUCING METHOD OF THE WINE TASTING CARRIER**

(30) Priority: 09.02.2022 TW 111104745
(71) Applicant: Kinpo Electronics, Inc., New Taipei City 22201 (TW)
(72) Inventor: HSU, Chieh-Li, 22201 New Taipei City (TW)
(74) Representative: 2K Patentanwälte Blasberg Kewitz & Reichel

(57) **Abstract**

A carrier set of wine tasting, a wine tasting carrier (1), and a producing method of the wine tasting carrier (1) is disclosed, wherein the carrier set includes at least two wine tasting carriers (1), and each of which is attached with different flavor (11) corresponding to a wine (2). The producing method includes following steps: obtaining an original carrier (10); selecting a target wine (2), and selecting one of multiple flavors (11) corresponding to the target wine (2); obtaining a producing material corresponding to the selected flavor (11); and, adding the producing material to the original carrier (10) to transform the original carrier (10) into the wine tasting carrier (1) that is attached with the selected flavor (11).

## Description

### BACKFROUND OF THE INVENTION

### Technical Field

The technical field relates to wine tasting, and specifically relates to a carrier set for wine tasting, a wine tasting carrier, and a producing method of the wine tasting carrier.

### Description of Related Art

In a wine tasting occasion, the host may first introduce the taste of a specific wine or liquor such as whisky. Taking a specific wine for an example, the wine taster may drink the specific wine after the introduction is finished.

Generally, the host can only describe each specific flavor brought by the wine through vague or general nouns and adjectives. Taking whisky for an example, the host may introduce the flavors of a specific whisky through vocabularies including Fruity, Floral, Herbaceous, Nutty, Earthy, Caramel, Smoky, Peaty, etc.

However, a specific wine (or liquor) usually involves multiple different flavors at the same time, and the flavors of wines made of different wineries, methods, or years are way different. To tasters who do not familiar with the flavors of wines, it is hard for them to understand which of the tasted flavor is the one introduced by the host even after they do drink the wine. In that case, the difficulty of wine tasting is raised, while the pleasure of wine tasting is reduced.

### SUMMARY OF THE INVENTION

The disclosure is directed to a carrier set of wine tasting, a wine tasting carrier, and a producing method of the wine tasting carrier, which may select a specific flavor to produce a wine tasting carrier correspondingly, so that a wine taster may directly and specifically experience the flavor that is brought by a target wine through tasting the wine tasting carrier.

In one of the embodiments, the carrier set of wine tasting includes:
a first wine tasting carrier, comprising an original carrier and a first producing material attached on the original carrier, wherein the first producing material provides a first flavor; and
a second wine tasting carrier, comprising the original carrier and a second producing material attached on the original carrier, wherein the second producing material provides a second flavor different from the first flavor, and the first flavor and the second flavor are corresponding to a target wine.

In one of the embodiments, the wine tasting carrier includes:
an original carrier, physically divided into two or more than two tasting areas; and
multiple producing materials, each of the producing materials being respectively attached on one of the tasting areas and providing different flavor corresponding to a target wine.

In one of the embodiments, the producing method of the wine tasting carrier includes following steps:
a) obtaining an original carrier;
b) selecting a target wine;
c) selecting one of a plurality of flavors corresponding to the target wine;
d) obtaining a producing material corresponding to the flavor selected in the step c); and
e) attaching the producing material being obtained to the original carrier to transform the original carrier into a wine tasting carrier attached with the flavor selected in the step c).

In comparison with the related art, the present disclosure assists the wine taster to taste a single interested flavor once at a time through the wine tasting carrier; thereby, making the wine taster to understand each flavor that is corresponding to different wines. Therefore, the wine tasting occasion may be hold easily, the difficulty of wine tasting may be reduced, and the pleasure of wine tasting may be increased at the same time.

### DESCRIPTION OF THE DRAWINGS

FIG. 1 is a schematic diagram showing a wine tasting carrier of a first embodiment according to the present disclosure.
FIG. 2 is a schematic diagram showing a production line of the wine tasting carrier of an embodiment according to the present disclosure.
FIG. 3 is a flowchart of a producing method of an embodiment according to the present disclosure.
FIG. 4 is a block diagram of a producing apparatus of an embodiment according to the present disclosure.
FIG. 5 is a schematic diagram showing a producing apparatus of a first embodiment according to the present disclosure.
FIG. 6 is a schematic diagram showing the producing apparatus of a second embodiment according to the present disclosure.
FIG. 7 is a schematic diagram showing the wine tasting carrier of a second embodiment according to the present disclosure.
FIG. 8 is a schematic diagram showing the wine tasting carrier of a third embodiment according to the present disclosure.

### DETAILED DESCRIPTION OF THE INVENTION

In cooperation with the attached drawings, the technical contents and detailed description of the present invention are described hereinafter according to multiple embodiments, being not used to limit its executing scope. Any equivalent variation and modification made according to appended claims is all covered by the claims claimed by the present invention.

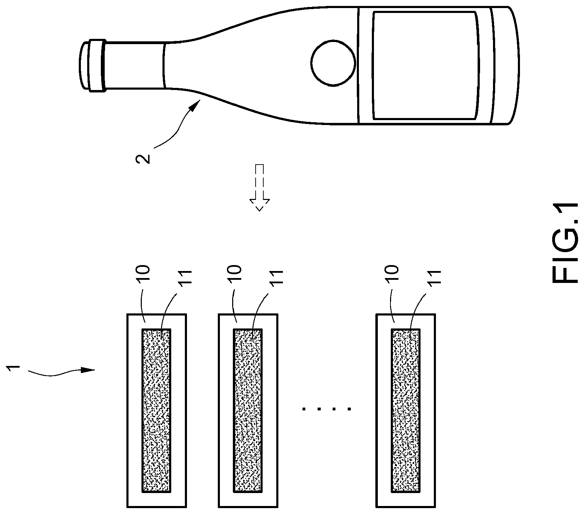

Please refer to FIG. 1, which is a schematic diagram showing a wine tasting carrier of a first embodiment according to the present disclosure. As shown in FIG. 1, a wine tasting carrier 1 is disclosed in the present disclosure, wherein one wine tasting carrier 1 is attached with one flavor 11 that is corresponding to a target wine 2. In particular, the wine tasting carrier 1 of the present disclosure is produced based on an original carrier 10 which does not bring any special flavor, and a liquid material that may spread a flavor of the target wine 2 is attached onto the original carrier 10. The original carrier 10 may be transformed into the wine tasting carrier 1 after absorbing the liquid material attached thereon, and the liquid material attached on the wine tasting carrier 1 may provide the flavor 11 correspondingly.

More specific, the present disclosure discloses a carrier set of wine tasting. As shown in FIG. 1, a carrier set of wine tasting includes at least two wine tasting carriers 1, each of which is respectively attached with different flavor 11 corresponding to the target wine 2.

Taking the three wine tasting carriers 1 shown in FIG. 1 as an example, a carrier set of wine tasting is constituted by the three wine tasting carriers 1, so the carrier set may provide three different flavors corresponding to the target wine 2 through the three wine tasting carriers. However, the quantity of the wine tasting carriers 1 is not limited to the disclosure of FIG. 1.

In the embodiment of FIG. 1, a first wine tasting carrier includes an original carrier 10 and a first flavor attached thereon, a second wine tasting carrier includes another original carrier 10 and a second flavor attached thereon, and a third wine tasting carrier includes another original carrier 10 and a third flavor attached thereon. In this case, the first flavor, the second flavor, and the third flavor are different flavors, but the three flavors are corresponding to a wine (i.e., the target wine 2).

In one embodiment, each wine may have one carrier set correspondingly, and the quantity of the wine tasting carrier 1 included in the carrier set is corresponding to the quantity of flavors brought by the wine itself. If a wine taster is interested in a specific wine (such as a wine, a whisky, or a champagne, etc. made of a specific year or from a specific winery), the wine taster may obtain, produce, or purchase the carrier set related to the specific wine. Through tasting the multiple wine tasting carriers 1 of the carrier set in an indicated order, the wine taster may sequentially experience each of the multiple flavors of the specific wine.

The way the wine taster tasting the wine tasting carrier 1 is to directly put the wine tasting carrier 1 into the mouth. After the liquid material attached on the wine tasting carrier 1 is decomposed by saliva, the wine taster may obtain the flavor 11 provided by the liquid material in his mouth.

In a first embodiment, the original carrier 10 is an edible carrier, such as a rice paper membrane. When the wine taster puts the wine tasting carrier 1 into the mouth, the wine tasting carrier 1 dissolves in the mouth and directly releases the attached flavor 11 in the mouth. In a second embodiment, the original carrier 10 is made of a non-dissolvable material. As mentioned above, the flavor 11 of the wine tasting carrier 1 is provided by the liquid material. After the wine taster puts the wine tasting carrier 1 into the mouth, saliva in the mouth may decompose the liquid material attached on the wine tasting carrier 1. Therefore, the wine taster may absorb the flavor 11 of the wine tasting carrier 1 through the decomposed liquid material, while the foundation (i.e., the original carrier 10) of the wine tasting carrier 1 remains.

The carrier set of the present disclosure may be used in different wine tasting occasions, and the flavors 11 attached on the wine tasting carriers 1 may be corresponding to the flavors brought by the target wine 2 itself. Taking a specific wine for an example, if a target wine 2 may bring flavors of Citrus, Nutty, Caramel, and Sulfur after drinking, the carrier set corresponding to the target wine 2 may include four wine tasting carriers 1 respectively attached with a flavor of Citrus, a flavor of Nutty, a flavor of Caramel, and a flavor of Sulfur. Taking a specific whisky for another example, if a target wine 2 (namely, a target whisky) may bring flavors of Cereal, Nutty, Earthy, Smoky, and Woody after drinking, the carrier set corresponding to the target wine 2 may include five wine tasting carriers 1 respectively attached with a flavor of Cereal, a flavor of Nutty, a flavor of Earthy, a flavor of Smoky, and a flavor of Woody.

In a wine tasting occasion, a host may introduce the multiple flavors (such as a flavor of Citrus and a flavor of Nutty, etc.) that are brought by the target wine 2 after drinking. However, the flavors brought by a wine after drinking is complicate; therefore, the taster may not clearly understand the flavor(s) introduced by the host.

The present disclosure may pre-analyze the target wine 2, so that the flavors of the target wine 2 may be retrieved through different manners such as an extraction approach, or the flavors may be provided through liquid materials that are created by compound or composition.

In the wine tasting occasion, after the host introduces one flavor of the target wine 2, the wine taster may taste the wine tasting carrier 1 that is corresponding to the introduced flavor for the mouth and the tongue to experience the flavor, and then drinks the target wine 2 after tasting the wine tasting carrier 1. Therefore, the wine taster may be assisted to clearly understand the flavors of the target wine 2, so as to improve the pleasure of wine tasting and reduce the difficulty of the same.

In addition to the identifiable flavors brought by the wine itself, the wine may also bring different flavors at different time points or different positions in the mouth after drinking. In particular, the flavors of the wine may be further defined as a flavor of an entrance section, a flavor of a middle section, a flavor of a closing section, and a flavor of an aftertaste section, etc. In one embodiment, the multiple wine tasting carriers 1 included in the carrier set may be respectively corresponding to different flavors 11 of the target wine 2 being brought at different time points or different positions in the mouth.

In the above embodiment, after the host introduces the change in the taste of the target wine 2 with the change of time or position after drinking, the wine taster may follow the introduction order and taste the wine tasting carriers 1 accordingly. Therefore, the wine taster may first understand the change in the taste of the target wine 2 following the change of time or position in the mouth, and then drink the target wine 2 on the basis of understanding.

It should be mentioned that there are three formal steps in the professional wine tasting culture, which include an Observe step, a Smell step, and a Taste step. In particular, an Observe step means to observe the color of the wine through visual sense, a Smell step means to smell the odor of the wine through olfactory sense, and a Taste step means to taste the flavor of the wine through taste sense. However, the odor of the wine may not be obtained through taste sense. In other words, the target wine 2 may bring different feelings when being smelled and drank.

According to the above issue, the wine tasting carriers 1 of the present disclosure may carry different flavors of the target wine 2 for the wine taster to taste through taste sense, and may also carry different odors of the target wine 2 for the wine taster to smell through olfactory sense. In the wine tasting occasion, the wine taster may directly observe the color of the target wine 2, and the wine taster may then smell each odor and taste each flavor of the target wine 2 through using a carrier set that is corresponding to the target wine 2.

In particular, the present disclosure may extract the odor spread from the target wine 2 and produce an odor material correspondingly, and then attach the odor material to the original carrier 10 to form a wine tasting carrier 1 which may be smelled by the wine taster. In the embodiment, the carrier set corresponding to the target wine 2 may include one or more wine tasting carriers 1 that are used for the wine taster to smell and one or more wine tasting carriers 1 that are used for the wine taster to taste. In one case, the odor material may provide an odor of the target wine 2 itself. In another case, the odor material may provide an odor of one flavor brought by the target wine 2, but not limited thereto.

In one embodiment, the odor material may be liquid material, gas material, or solid material, etc. The odor material is added to the wine tasting carrier 1. A membrane (not shown) is used to cover the odor material, so as to seal the odor brought by the odor material in the wine tasting carrier 1. The membrane may be made of edible or non-edible material, and the membrane may be dissolvable or non-dissolvable, but not limited.

When the wine taster wants to use the wine tasting carrier 1, the wine taster may tear the membrane off the wine tasting carrier 1 to release the odor carried by the odor material, so that the wine taster may smell the odor. The present disclosure adds the wine tasting carrier 1 for smelling purpose into the carrier set; thereby, making the wine tasting occasion more complete and more professional.

In other embodiment, the wine tasting carrier 1 for smelling purpose may be a dry carrier carries a demanded odor. In the embodiment, the odor of the wine tasting carrier 1 may not directly spread into the air even if the membrane is not arranged on the wine tasting carrier 1. When the wine taster wants to use the wine tasting carrier 1 for smelling, one thing needs to be done is wetting the wine tasting carrier 1 for the wine tasting carrier 1 to release the carried odor. Therefore, the wine taster may smell the odor of the target wine 2 through using the wine tasting carrier 1.

However, the above descriptions are only few embodiments of the present disclosure, but not limited thereto.

In part of the wine tasting occasions, the wine taster may wish to have a dish (such as steak, duck breast, or caviar, etc.) that is best pairing with the target wine 2. However, the wine taster may be unwilling to eat the food due to certain reasons (for example, diet reason or health reason).

In order to solve the above problem, the multiple wine tasting carriers 1 included in the carrier set of the present disclosure may be respectively attached with the flavors 11 corresponding to different food suitable for the target wine 2. When the wine taster drinks the target wine 2, he may put a corresponding wine tasting carrier 1 into the mouth, so as to taste the flavor 11 of the food that is suitable for the target wine 2. Therefore, the wine taster may have the food taste without actually eating the food. As a result, the flavor of the target wine 2 may be improved accordingly.

However, the above descriptions are only few embodiments of the present disclosure, but not limited thereto.

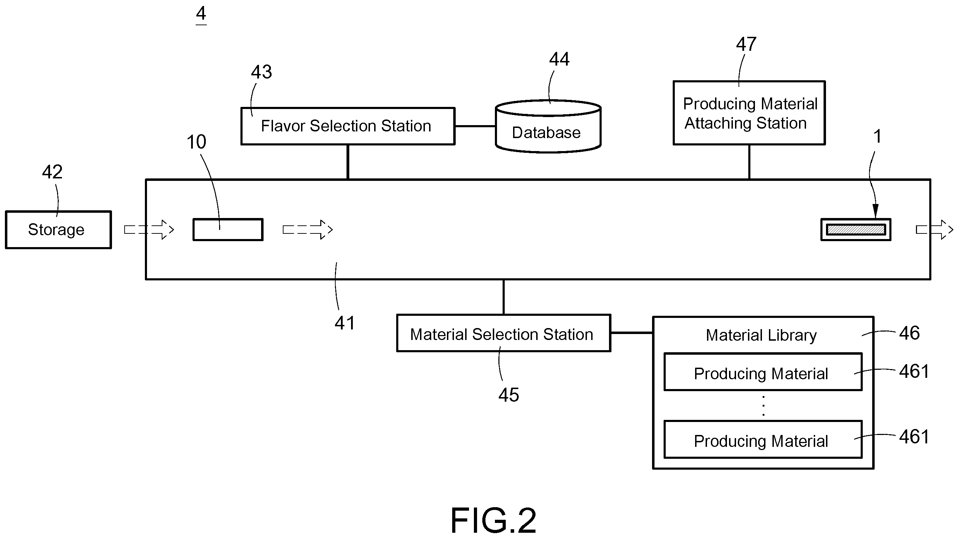

Please refer to FIG. 2, which is a schematic diagram showing a production line of the wine tasting carrier of an embodiment according to the present disclosure. FIG. 2 discloses a specific example of a production line 4 for producing the wine tasting carrier 1. As shown in FIG. 2, the production line 4 may include a conveyor 41, a storage 42, a flavor selection station 43, a database 44, a material selection station 45, a material library 46, and a producing material attaching station 47.

The storage 42 stores a plurality of original carrier 10. When producing the wine tasting carrier 1, the original carrier 10 stored in the storage 42 is put onto the conveyor 41 manually by the operator or automatically by the system, and the conveyor 41 transports the original carrier 10 to move to each station for being processed. In one embodiment, the original carrier 10 is an edible carrier such as a rice paper membrane, but not limited thereto.

The flavor selection station 43 is connected with the database 44, wherein the database 44 records multiple flavor information respectively corresponding to different wines. For example, the database 44 may create different folders for different wines, and each of the folders records information of one or more flavors related to a corresponding wine.

In the present disclosure, the flavor selection station 43 may be controlled manually by the operator or automatically by the system, so as to select one target wine 2 from the multiple wines recorded in the database 44. After the target wine 2 is selected, the flavor selection station 43 inquires the database 44 again in accordance with the selected target wine 2, and selects and reads one of the multiple flavors that are corresponding to the target wine 2 from the database 44.

In a first embodiment, the flavor selected and read by the flavor selection station 43 is a single flavor brought by the target wine 2 itself. In a second embodiment, the flavor selected and read by the flavor selection station 43 is a single flavor brought by the target wine 2 at a specific time point or at a specific position in the mouth after drinking. In a third embodiment, the flavor selected and read by the flavor selection station 43 is a flavor of a dish that is best pairing with the target wine 2.

In particular, the database 44 may create at least three folders for each wine. According to the three embodiments mentioned above, the three folders may be used to respectively record the information of three different categories of flavor corresponding to a wine. However, the above descriptions are only few embodiments of the present disclosure, but not limited thereto.

As mentioned above, when the original carrier 10 is moved by the conveyor 41 to the flavor selection station 43, the flavor selection station 43 may select a flavor that needs to be attached to the original carrier 10 through the aforementioned procedure.

The material selection station 45 is connected with the material library 46, wherein the material library 46 stores multiple producing materials 461 that are corresponding to different flavors recorded in the database 44. For an example, if thirty flavors are recorded in the database 44 (i.e., the database 44 stores thirty sets of flavor information), the material library 46 may store multiple producing materials 461 that may be used to provide the thirty flavors. In one embodiment, one producing material 461 may directly provide one of the recorded flavors. In another embodiment, each of the recorded flavor may be produced and provided by the production line 4 through mixing multiple producing materials 461. However, the above descriptions are only few embodiments of the present disclosure, but not limited thereto.

In particular, the material selection station 45 may communicate with the flavor selection station 43 through a wired manner or a wireless manner, and the material selection station 45 may obtain the information related to the selected flavor (such as a flavor of Woody, a flavor of Earthy, or a flavor of Chemical, etc.) from the flavor selection station 43. Next, the material selection station 45 inquires and controls the material library 46 in accordance with the obtained information, so as to retrieve, from the material library 46, one or more of the producing materials 461 that may be used to provide the selected flavor.

In one embodiment, the producing materials 461 stored in the material library 46 are, for example but not limited to, liquid materials. The material selection station 45 may directly provide the selected flavor through a single producing material 461, or provide the selected flavor through a mixture of multiple producing materials 461.

When the original carrier 10 is moved by the conveyor 41 to the material selection station 45, the material selection station 45 may obtain a single producing material 461 or multiple producing material 461 which are used to provide the selected signal flavor.

The producing material attaching station 47 is located at a producing zone of the production line 4, and the producing material attaching station 47 may obtain the one or more producing materials 461 corresponding to the selected flavor from the material selection station 45 or the material library 46. When the original carrier 10 is moved by the conveyor 41 to the producing material attaching station 47, the producing material attaching station 47 attaches the one or more producing materials 461 to the original carrier 10. The flavor provided by the producing material 461 may then attach to the original carrier 10; thereby, transforming the original carrier 10 that does not have any special flavor into the wine tasting carrier 1 that carries the selected flavor.

In a first embodiment, the producing material 461 is a liquid material and stored in a capsule (not shown). In the embodiment, the producing material attaching station 47 obtains the capsule that stores the producing material 461 related to the selected flavor from the material selection station 45 or the material library 46. When the original carrier 10 is moved by the conveyor 41 to the producing material attaching station 47, the producing material attaching station 47 controls a specific mechanism (not shown) to poke or to open the capsule, so the producing material 461 in the capsule may drip from the capsule to the original carrier 10 to be absorbed by the surface of the original carrier 10. Therefore, the original carrier 10 may be transformed into the wine tasting carrier 1 having the flavor of the producing material 461.

In a second embodiment, the producing material 461 is a liquid material, and the material library 46 stores multiple producing materials 461 through tanks. In the embodiment, the producing material attaching station 47 may control the material library 46. When the original carrier 10 is moved by the conveyor 41 to the producing material attaching station 47, the producing material attaching station 47 controls the material library 46 in accordance with the selection made by the material selection station 45, and the producing material 461 stored in a designated tank may drip onto the original carrier 10 through a pipe (not shown) and be absorbed by the surface of the original carrier 10. Therefore, the original carrier 10 may be transformed into the wine tasting carrier 1 having the flavor of the producing material 461.

In a third embodiment, the producing material 461 is a liquid material, and the material library 46 stores multiple producing materials 461 through tanks. In the embodiment, the producing material attaching station 47 includes a heating unit (not shown).

When the original carrier 10 is moved by the conveyor 41 to the producing material attaching station 47, the producing material attaching station 47 controls the material library 46 in accordance with the selection made by the material selection station 45, and the producing material 461 stored in a designated tank may flow into the producing material attaching station 47 through a pipe (not shown). Next, the producing material attaching station 47 controls the heating unit to heat the producing material 461 to transform the producing material 461 into gas form. The producing material 461 as gas form may then attach to the original carrier 10 and be absorbed by the original carrier 10. Therefore, the original carrier 10 may be transformed into the wine tasting carrier 1 having the flavor of the producing material 461.

However, the above descriptions are only few embodiments of the present disclosure, but the producing approach of the wine tasting carrier 1 of the present disclosure is not limited thereto.

It should be mentioned that even if the producing material 461 may be absorbed by the original carrier 10 during the producing procedure; however, the producing material 461 may volatilize in the air when contacting with the air. Therefore, the flavor brought by the producing material 461 may spill out, and the spilled flavor may then affect the user experience. For example, if the wine taster stores or brings multiple wine tasting carriers 1, the flavor spilled from one of the wine tasting carriers 1 may affect the flavor of the others.

In one embodiment, the producing material attaching station 47 may arrange a sealing film on the original carrier 10 after attaching the producing material 461 onto the original carrier 10. The sealing film may be made of edible and dissolvable material, and the sealing film sticks on the surface of the original carrier 10 that absorbs the producing material 461. After the wine tasting carrier 1 is produced, the producing material 461 may be sealed by the sealing film, and the flavor brought by the producing material 461 may be completely reserved in the wine tasting carrier 1.

As mentioned above, the sealing film is made of edible and dissolvable material, which may not affect the wine taster in using the wine tasting carrier 1.

However, the above description is only one of the embodiments of the present disclosure, but the sealing film is not an essential component in producing the wine tasting carrier 1.

As shown in FIG. 2, after the original carrier 10 stored in the storage 42 is put on the conveyor 41, the original carrier 10 may be moved through the flavor selection station 43 and the material selection station 45 and then entered the producing material attaching station 47. The producing material attaching station 47 processes the original carrier 10 in accordance with the selections made by the flavor selection station 43 and the material selection station 45, so as to generate the wine tasting carrier 1 being attached with the selected flavor. After that, the production line 4 may output the wine tasting carrier 1 for the wine taster to use.

As mentioned above, each wine may carry multiple flavors. The production line 4 of the present disclosure may process multiple original carriers 10 on the conveyor 41 accordingly in an order based on the selected target wine 2, so as to generate multiple wine tasting carriers 1 that are respectively corresponding to different flavors of the target wine 2.

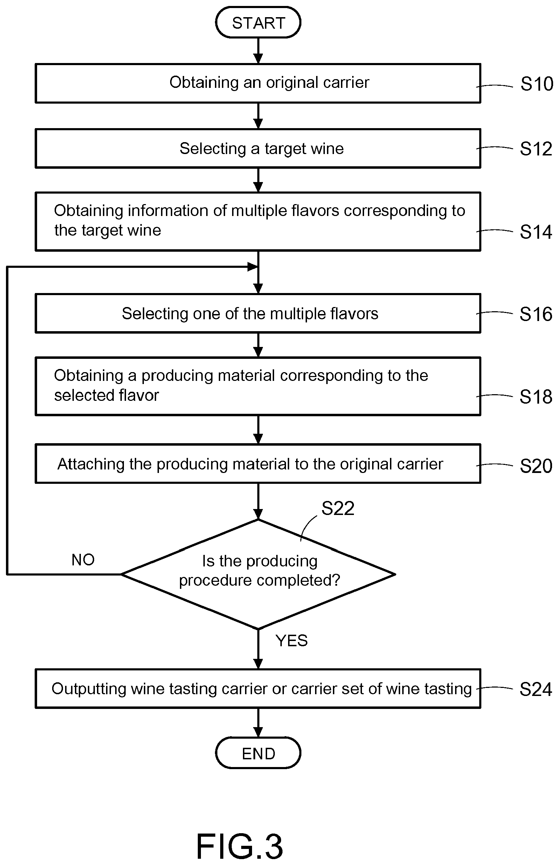

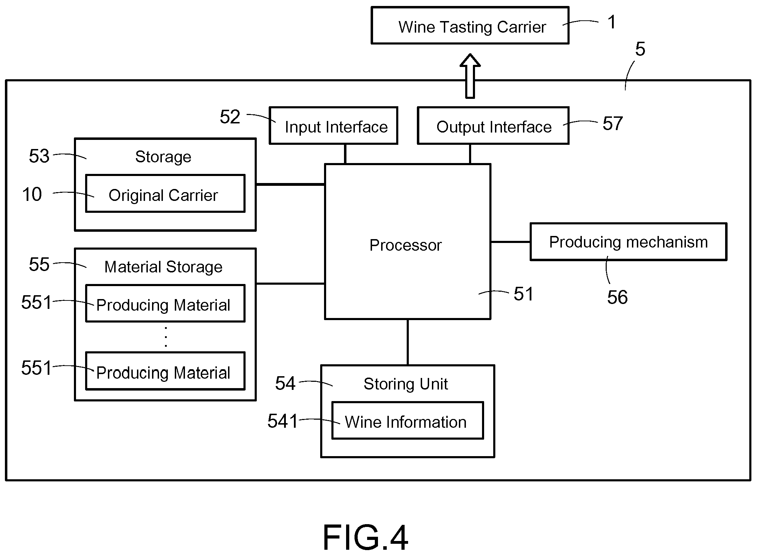

Please refer to FIG. 3, which is a flowchart of a producing method of an embodiment according to the present disclosure. FIG. 3 discloses a producing method of the wine tasting carrier of the present disclosure, wherein the producing method may be applied to the production line 4 as shown in FIG. 2 and to a producing apparatus (such as the producing apparatus 5 shown in FIG. 4) that is made and improved based on the production line 4. Also, the producing method of the present disclosure may be applied in an environment that produces the wine tasting carriers by human labor, but not limited to.

As shown in FIG. 3, to use the producing method of the present disclosure, an original carrier 10 without any special flavor should be obtained by the production line 4, the producing apparatus 5, or the user (step S10). In one embodiment, the original carrier 10 may be an edible carrier (i.e., a carrier that is dissolvable in the mouth), such as a rice paper membrane, but not limited.

In another embodiment, the original carrier 10 is made of a material that is non-dissolvable in the mouth. In the embodiment, when the wine taster put the wine tasting carrier 1 into the mouth, the producing material 461 attached on the wine tasting carrier 1 may be decomposed by saliva, and then the wine taster may taste the flavor provided by the decomposed producing material 461 in the mouth.

Next, a target wine 2 corresponding to the wine tasting carrier 1 (or the carrier set) that the user, the production line 4, or the producing apparatus 5 wants to produce should be selected (step S12). For example, the target wine 2 may be a specific whisky or a specific wine that is made of a specific winery or a specific year, but not limited thereto.

In the present disclosure, the user may pre-analyze the target wine 2 and record the information related to the one or more flavors corresponding to the target wine 2 to a database. After the step S12, the production line 4, the producing apparatus 5, or the user may obtain the information of the multiple flavors corresponding to the target wine 2 from the database (step S14), and select one of the multiple flavors in accordance with the information being read (step S16). Next, the production line 4, the producing apparatus 5, or the user may obtain the producing material(s) 461 corresponding to the selected flavor in accordance with the selection made from the step S16 (step S18).

In a first embodiment, the production line 4, the producing apparatus 5, or the user may select, in the step S16, a single flavor brought by the wine target 2 itself. For example, the selected flavor may be a flavor of Fruity or a flavor of floral, etc. In a second embodiment, the production line 4, the producing apparatus 5, or the user may select, in the step S16, a single flavor that may be brought by the target wine 2 at a specific time point or at a specific position in the mouth after drinking. For example, the selected flavor may be a flavor of a middle section or a flavor of an aftertaste section, etc. In a third embodiment, the production line 4, the producing apparatus 5, or the user may select, in the step S16, a flavor corresponding to a dish (such as steak) that is most pairing with the target wine 2. However, the above descriptions are only few embodiments of the present disclosure, but not limited thereto.

Next, the production line 4, the producing apparatus 5, or the user may attach the one or more producing materials 461 obtained from the step S18 to the original carrier 10, so as to transform the original carrier 10 into the wine tasting carrier 1 having the flavor provided by the producing material(s) 461 (step S20).

In one embodiment, the production line 4, the producing apparatus 5, or the user may further arrange a sealing film on the original carrier 10 in the step S18. The sealing film is made of an edible and dissolvable material and is used to stick to the surface of the original carrier 10 to seal the producing material 461 in the original carrier 10. Therefore, the flavor brought by the producing material 461 on the wine tasting carrier 1 may be prevented from spilling out to the air.

After the step S20, the production line 4, the producing apparatus 5, or the user may determine whether the producing procedure of the wine tasting carrier 1 is completed (step S22). For example, if the target wine 2 carries ten flavors, the flow shown in FIG. 3 should be executed ten times to sequentially produce ten wine tasting carriers 1 that are respectively attached with one of the ten flavors. Then, a carrier set of wine tasting that is corresponding to the target wine 2 may be constituted by the ten wine tasting carriers 1.

In another embodiment, the production line 4, the producing apparatus 5, and the user may physically divide one original carrier 10 into multiple areas and respectively attach the producing materials 461 that are corresponding to different flavors of same target wine 2 onto different areas (detailed described in the following). In the embodiment, the carrier set corresponding to the target wine 2 may be directly constituted by the multiple areas of a single wine tasting carrier 1. In other words, it is unnecessary for the carrier set of the present disclosure to involve multiple separated wine tasting carriers 1.

As disclosed in FIG. 3, if the producing procedure is determined to be unfinished in the step S22, the production line 4, the producing apparatus 5, or the user returns to the step S16 to select the next flavor of the target wine 2 and to produce the next wine tasting carrier 1 accordingly.

If the producing procedure is determined to be finished in the step S22, the production line 4, the producing apparatus 5, or the user may output the wine tasting carrier 1 or the carrier set being produced completely (step S24), and then terminate the producing method of the present disclosure.

As discussed above, in addition to the production line 4, the present disclosure further discloses a producing apparatus 5 for producing the wine tasting carrier 1. In particular, the producing apparatus 5 of the present disclosure is made of improving each station of the production line 4 and each step of the producing method and implementing all the producing procedure of the wine tasting carrier 1 into a single machine. The user may place the producing apparatus 5 at different wine tasting occasions (such as a winery or a restaurant, etc.). When a user wants to taste a specific flavor, the producing apparatus 5 may be operate to select a target wine 2 and a target flavor and produce a wine tasting carrier 1 correspondingly in real-time.

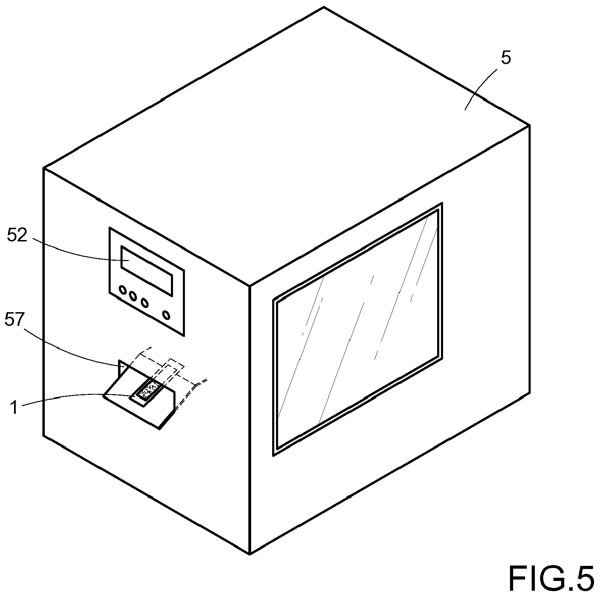

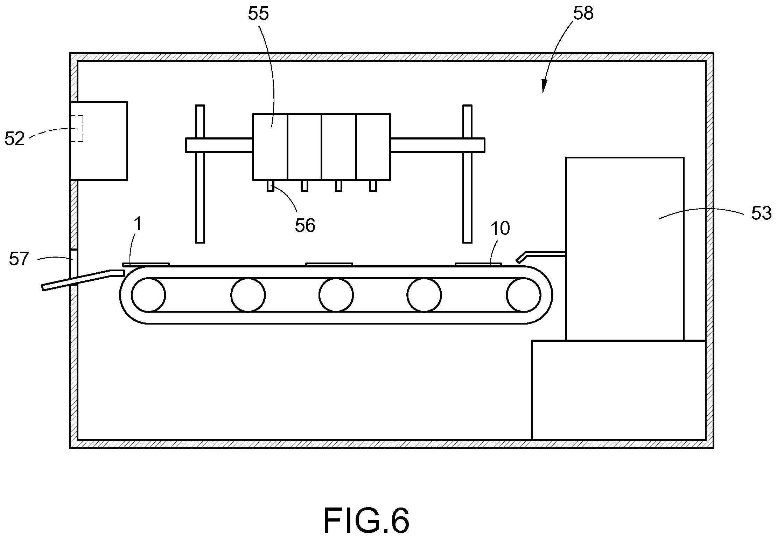

Please refer to FIG. 4, FIG. 5, and FIG. 6 at the same time, wherein FIG. 4 is a block diagram of a producing apparatus of an embodiment according to the present disclosure, FIG. 5 is a schematic diagram showing a producing apparatus of a first embodiment according to the present disclosure, and FIG. 6 is a schematic diagram showing the producing apparatus of a second embodiment according to the present disclosure.

As disclosed in FIG. 4, FIG. 5, and FIG. 6, the producing apparatus 5 at least includes a processor 51, an input interface 52, a storage 53, a storing unit 54, a material storage 55, a producing mechanism 56, and an output interface 57, wherein the input interface 52, the storage 53, the storing unit 54, the material storage 55, and the producing mechanism 56 are electrically connected with the processor 51.

A plurality of original carriers 10 are stacked in the storage 53 for the producing apparatus 5 to process. The storing unit 54 records a plurality of wine information 541, wherein each of the wine information 541 records an information related to multiple flavors corresponding to one wine, such as the multiple flavors brought by the wine itself, the multiple flavors brought by the wine at different time points or at different positions in the mouth after drinking, or the multiple flavors of dishes that are pairing with the wine, but not limited thereto.

To use the producing apparatus 5 of the present disclosure, the user needs to pre-analyze one or more wines 2 to extract the flavors from each wine 2, and the user needs to record the information related to these flavors into the storing unit 54.

The material storage 55 stores multiple producing material 551 that are corresponding to these flavors. In particular, after a specific wine is analyzed, the user may record the information related to the multiple flavors of this wine into the storing unit 54, and the user may obtain or create the producing materials 551 that may be used to provide these flavors through experiments. Therefore, the user may store the producing materials 551 in the material storage 55. In one embodiment, the producing materials 551 are liquid materials, and the material storage 55 has multiple tanks to respectively store each of the liquid materials.

The input interface 52 may be a human machine interface (HMI), such as a touch screen, a combination of monitor and keyboard, or an interface of voice input, etc., but not limited. When using the producing apparatus 5, the producing apparatus 5 may display the name or the introduction of one or more supportable wines on the input interface 52, and the user may operate the input interface 52 to select one of the displayed wines to be the target wine 2.

After the target wine 2 is selected, the processor 51 inquires the storing unit 54 in accordance with the selection to read the wine information 541 corresponding to the selected target wine 2. Also, the producing apparatus 5 displays the wine information 541 on the input interface 52. Next, the user may again operate the input interface 52 to select one of the flavors included in the wine information 541 being displayed.

After the selection made by the user, the processor 51 controls the storage 53 to transport an original carrier 10 through a transportation mechanism (not shown) to a producing space 58 in the producing apparatus 5. In addition, the processor 51 sends a control command to the material storage 55 correspondingly in accordance with the flavor selected by the user, so that the material storage 55 transports (through the transportation mechanism) the producing material(s) 551 corresponding to the selected flavor to the producing space 58.

Next, the processor 51 controls the producing mechanism 56 to operate in the producing space 58 to attach the producing material 551 onto the original carrier 10. Therefore, the original carrier 10 may absorb the producing material 551, and the original carrier 10 may be transformed into the wine tasting carrier 1 having the selected flavor.

After the producing material 551 is attached, the producing mechanism 56 may further stick a sealing film on the original carrier 10, wherein the sealing film is made of edible and dissolvable material. The sealing film stuck on the original carrier 10 may seal the producing material 461 in the original carrier 10, so as to prevent the flavor of the producing material 461 from spilling out to the air.

Next, the processor 51 may control the output interface 57 (such as an opening) to output the wine tasting carrier 1 that is produced completely for the wine taster to taste.

In a first embodiment, the producing material 551 is stored in a capsule (not shown). The material storage 55 stores multiple capsules, each of which accommodates different producing material 551. In the embodiment, the processor 51 controls the material storage 55 to transport a capsule corresponding to the selected flavor to the producing space 58 and controls the producing mechanism 56 to stab the capsule in the producing space 58. Therefore, the producing material 551 accommodated in the capsule may drip on the surface of the original carrier 10 for the original carrier 10 to absorb. Therefore, the original carrier 10 may be transformed into a wine tasting carrier 1 having the selected flavor.

In a second embodiment, the material storage 55 may store the producing material 551 (which is a liquid material) in one of multiple tanks. In the embodiment, the processor 51 controls the producing mechanism 56 to make the producing material 551 corresponding to the selected flavor flowing through a pipe into the producing space 58, so that the producing material 551 may directly drip on the original carrier 10 for the original carrier 10 to absorb. Therefore, the original carrier 10 may be transformed into a wine tasting carrier 1 having the selected flavor.

In a third embodiment, the material storage 55 stores the producing material 551 (which is a liquid material) in one of multiple tanks. In the embodiment, the producing mechanism 56 is a heating unit arranged inside or around the producing space 58. In this embodiment, the processor 51 controls the material storage 55 to transport the producing material 551 corresponding to the selected flavor to the producing mechanism 56, and control the producing mechanism 56 to start heating to transform the liquid producing material 551 in the producing space 58 into gas producing material 551. The gas producing material 551 in the producing space 58 may encompass the original carrier 10 and be absorbed by the original carrier 10. Therefore, the original carrier 10 may be transformed into a wine tasting carrier 1 having the selected flavor.

However, the above descriptions are only few embodiments of the present disclosure, but not limited thereto.

It should be mentioned that the producing apparatus 5 of the present disclosure may connect with a user's mobile device through a wireless transmission interface (not shown). Therefore, the user may operate the producing apparatus 5 through a wireless manner.

For example, in a crowded wine tasting occasion, the wine taster may connect to the producing apparatus 5 by using the mobile device, so as to obtain the information related to the multiple wines supportable to the producing apparatus 5. The wine taster may directly select a target wine or a demanded flavor on the mobile device. After the selection is made, the producing apparatus 5 may control each of the components based on the selection of the wine taster, so as to produce a wine tasting carrier 1 or a carrier set of wine tasting having the demanded flavor(s) immediately, and then provide the wine tasting carrier 1 or the carrier set to the wine taster through the output interface 57.

In the aforementioned embodiment, the user may control the producing apparatus 5 through his own mobile device, so it is unnecessary for the producing apparatus 5 to arrange the input interface 52. Furthermore, based on the using flexibility and extension convenience, the producing apparatus 5 of the present disclosure may store the information related to the flavors and the wines on a cloud server (not shown) and read the information correspondingly from the cloud server when the wine tasting carrier 1 needs to be produced. Therefore, it is unnecessary for the producing apparatus 5 to arrange the storing unit 54.

According to the size of the producing apparatus 5 as well as the occasion for using the producing apparatus 5, the present disclosure defines the producing apparatus 5 as a large producing apparatus and a portable producing apparatus. The detailed description will be provided in the following.

The large producing apparatus may support more categories of wines; therefore, more types and quantities of producing materials 551 should be stored in the large producing apparatus and it enlarges the size of the producing apparatus. As a result, the large producing apparatus is barely moved and suitable for being placed in the winery or the wine stores (or the liquor stores).

In particular, this kind of large producing apparatus may record and produce all flavor of all wine that is provided or sole at the place where the producing apparatus is placed. When the wine taster goes to the place for wine tasting, learning, or purchasing, the large producing apparatus may be operated to produce the wine tasting carrier 1 (or the carrier set) immediately for the wine taster to easily understand the wine(s) that he is going to drink or purchase.

On the contrary, the portable producing apparatus may support less categories of wines in comparison with the large producing apparatus; therefore, less types and quantities of producing materials 551 need to be stored in the portable producing apparatus. The portable producing apparatus may have a smaller size accordingly. Comparing to the large producing apparatus, the portable producing apparatus is easily moved and is suitable to be brought to different wine tasting occasions.

In particular, this kind of portable producing apparatus may be used to record and produce, for example but not limited to: (1) multiple flavors brought by a single wine itself; (2) a flavor of dish that is pairing with a single wine; or (3) same type of flavors brought by different wines (for example, different flavors of Smoky brought by different wines). However, the above descriptions are only few embodiments of the present disclosure, but not limited thereto. In the present disclosure, the wine taster may bring the portable producing apparatus to a wine tasting occasion that is hold with a specific topic or a specific purpose, so as to assist the event to process and to increase the interesting and the profession of the wine tasting occasion.

As mentioned above, a wine itself may bring multiple flavors (such as a flavor of Fruity or a flavor of Floral, etc.), or the wine may bring different flavors (such as a flavor of entrance section, a flavor of middle section, or a flavor of aftertaste section, etc.) at different time points or at different positions in the mouth after drinking. The producing method and the producing apparatus of the present disclosure are used to produce multiple wine tasting carriers 1 in accordance with multiple flavors that are corresponding to one wine, so that a carrier set of wine tasting may be constituted to correspond to all the flavors of this wine. However, if the volume of the original carrier 10 is large or long enough and the original carrier 10 includes multiple areas thereon, the producing method and the producing apparatus of the present disclosure may also use a single original carrier 10 to directly implement a carrier set of wine tasting.

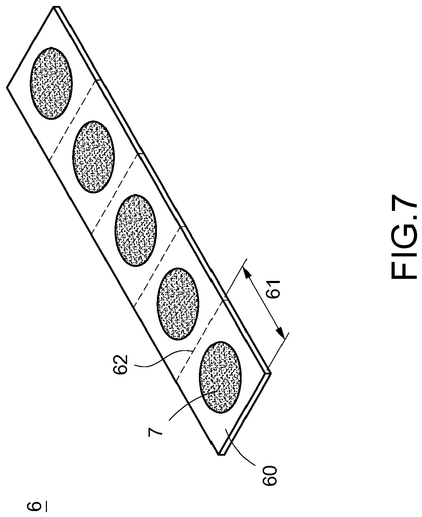

Please refer to FIG. 7, which is a schematic diagram showing the wine tasting carrier of a second embodiment according to the present disclosure. FIG. 7 discloses another wine tasting carrier 6 of the present disclosure. In the embodiment of FIG. 7, the wine tasting carrier 6 includes an original carrier 60. The original carrier 60 is physically divided into two or more than two tasting areas 61.

When producing the wine tasting carrier 6, the producing method or the producing apparatus of the present disclosure may attach different flavors 7 corresponding to the target wine 2 respectively onto different tasting areas 61 of the original carrier 60. Therefore, the original carrier 60 may be transformed into a wine tasting carrier 6 having multiple flavors 7 corresponding to the target wine 2. For example, the producing method or the producing apparatus of the present disclosure may respectively drip different producing materials to different tasting areas 61 of the original carrier 60, so as to generate a demanded wine tasting carrier 6.

The original carrier 60 may be an edible carrier, such as a rice paper membrane, but not limited. In one embodiment, the arrangement order of the multiple flavors 7 on the wine tasting carrier 6 may be corresponding to the introduction order made by a host aimed at the target wine 2. For example, if a host in a wine tasting occasion wants to introduce a flavor of Fruity, a flavor of floral, and a flavor of Caramel in an order that are brought by a target wine 2, the wine tasting carrier 6 corresponding to the target wine 2 may be attached with a producing material for the flavor of Fruity, a producing material for the flavor of Floral, and a producing material for the flavor of Caramel respectively on a first tasting area, a second tasting area, and a third tasting area that are sequentially arranged from an front end to a rear end of the wine tasting carrier.

For another example, if the host in the wine tasting occasion wants to introduce multiple flavors respectively brought by a target wine 2 at an entrance section, at a middle section, a closing section, and an aftertaste section after drinking, the wine tasting carrier 6 corresponding to the target wine 2 may be attached with a producing material for the flavor of the entrance section, a producing material for the flavor of the middle section, a producing material for the flavor of the closing section, and a producing material for the flavor of the aftertaste section respectively on a first tasting area, a second tasting area, a third tasting area, and a fourth tasting area that are sequentially arranged from an front end to a rear end of the wine tasting carrier.

As mentioned above, the original carrier 60 of the present disclosure is an edible carrier, and the original carrier 60 is dissolvable in the taster's mouth. If a sealing film is stuck on the wine tasting carrier 6, the sealing film should also be made of edible material and should be dissolvable in the mouth.

In the above embodiment, the host may first introduce the flavor of the entrance section of the target wine 2, and then the wine taster may put the first tasting area of the wine tasting carrier 6 into the mouth to taste the flavor 7 corresponding the entrance section in the mouth after the first tasting area is decomposed by saliva. Then, the host may introduce the flavor of the middle section of the target wine 2, and then the wine taster may put the second tasting area of the wine tasting carrier 6 into the mouth to taste the flavor 7 of the middle section in the mouth after the second tasting area is decomposed by saliva, and so on.

As disclosed in FIG. 7, in an embodiment, the original carrier 60 may be divided into multiple tasting areas 61 through physical cutting lines 62. For example, the producing method or the producing apparatus 5 of the present disclosure may form the physical cutting lines 62 on the original carrier 60 through piercing holes, so as to divide the original carrier 60 into the multiple tasting areas 61. The existence of the cutting lines 62 reduces the contact area between two adjacent tasting areas 61. When producing the wine tasting carrier 6, the producing material may be prevented from flowing to an adjacent tasting area 61 when being attached to another tasting area 61 and affecting the experience of the taster in tasting the wine tasting carrier 6.

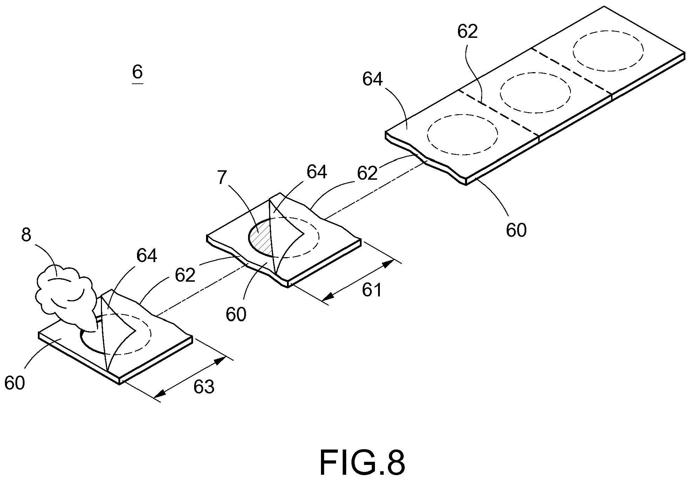

Please refer to FIG. 8, which is a schematic diagram showing the wine tasting carrier of a third embodiment according to the present disclosure. FIG. 8 discloses another wine tasting carrier 6' of the present disclosure. The difference between the embodiment of FIG. 7 and the embodiment of FIG. 8 is that a first tasting area 61 or a last tasting area 61 of the original carrier 60 as shown in FIG. 8 may be arranged as a smelling area 63.

In particular, when producing the wine tasting carrier 6', the producing method or the producing apparatus 5 of the present disclosure may obtain another odor producing material and attach the odor producing material to the smelling area 63. Therefore, the smelling area 63 may spread the corresponding odor needed by the wine taster into the air. In an embodiment, the odor producing material may provide the odor of the target wine 2 itself. In another embodiment, the odor producing material may provide the odor of one of a plurality of flavors brought by the target wine 2, but not limited thereto.

In the embodiment, the odor producing material may be liquid material, gas material, or solid material, but not limited thereto. The producing method or the producing apparatus 5 of the present disclosure may attach the odor producing material to the smelling area 63 and seal the smelling area 63 by using a sealing film 64. In the embodiment, the sealing film 64 may be made of edible material or non-edible material. Also, the sealing film 64 may be dissolvable or non-dissolvable, but not limited.

When using the wine tasting carrier 6', the wine taster may tear the sealing film 64 off the wine tasting carrier 6' for the demanded odor 8 (i.e., the odor provided by the odor producing material) to be released from the smelling area 63. After tearing the sealing film 64 off, the wine taster may smell the odor 8 released from the smelling area 63, and the wine taster may acknowledge the odor of the target wine 2. Next, the wine taster may cut or tear the entire smelling area 63 off the wine tasting carrier 6'. Next, along with the host introducing the flavors of the target wine 2, the wine taster may sequentially put each of the tasting areas 61 of the wine tasting carrier 6' into the mouth in a corresponding order. Therefore, the wine taster may taste the flavors of the target wine 2 in the mouth in an order that is corresponding to the introduction.

Through using the wine tasting carrier 6', the wine taster may taste each flavor brought by the target wine 2 through taste sense, and also smell the odor spread by the target wine 2 itself through olfactory sense. Therefore, the wine taster may easily understand the target wine 2, and the pleasure of wine tasting may be improved also.

## Claims

1. A carrier set of wine tasting, comprising:
a first wine tasting carrier (1), comprising an original carrier (10) and a first producing material attached on the original carrier (10), wherein the first producing material provides a first flavor; and
a second wine tasting carrier (1), comprising the original carrier (10) and a second producing material attached on the original carrier (10), wherein the second producing material provides a second flavor different from the first flavor, and the first flavor and the second flavor are corresponding to a target wine (2).

2. The carrier set of wine tasting in claim 1, wherein the original carrier (10) is a rice paper membrane.

3. The carrier set of wine tasting in any of the preceding claims, wherein the first producing material and the second producing material are liquid materials.

4. The carrier set of wine tasting in any of the preceding claims, wherein the first flavor and the second flavor are different flavors brought by the target wine (2) itself.

5. The carrier set of wine tasting in any of the preceding claims, wherein the first flavor and the second flavor are different flavors brought by the target wine (2) at different time points or at different positions in the mouth after drinking.

6. The carrier set of wine tasting in any of the preceding claims, wherein the first flavor and the second flavor are flavors corresponding to foods that are pairing with the target wine (2).

7. A wine tasting carrier (6), comprising:
an original carrier (60), physically divided into two or more than two tasting areas (61); and
multiple producing materials, each of the producing materials being respectively attached on one of the tasting areas (61) and providing different flavor (7) corresponding to a target wine (2).

8. The wine tasting carrier in claim 7, wherein the original carrier (60) is a rice paper membrane.

9. The wine tasting carrier in any of the preceding claims, wherein the multiple producing materials are liquid materials.

10. The wine tasting carrier in any of the preceding claims, wherein the producing materials respectively provide different flavors brought by the target wine (2) itself.

11. The wine tasting carrier in any of the preceding claims, wherein the producing materials respectively provide different flavors brought by the target wine (2) at different points or different positions in the mouth after drinking.

12. The wine tasting carrier in any of the preceding claims, wherein the original carrier (60) comprises physical cutting lines (62) to divide the original carrier (60) into the multiple tasting areas (61).

13. The wine tasting carrier in any of the preceding claims, wherein a first tasting area (61) or a last tasting area (61) of the original carrier (60) is a smelling area (63), and an odor (8) of the target wine (2) is sealed in the smelling area (63) through a sealing film (64), and the odor (8) is released when the sealing film (64) is torn off the smelling area (63).

14. A producing method of wine tasting carrier, comprising:
a) obtaining an original carrier (10);
b) selecting a target wine (2);
c) selecting one of a plurality of flavors corresponding to the target wine (2);
d) obtaining a producing material corresponding to the flavor (11) selected in the step c); and
e) attaching the producing material being obtained to the original carrier (10) to transform the original carrier (10) into a wine tasting carrier (1) having the flavor (11) selected in the step c).

15. The producing method in claim 14, wherein the step a) comprises selecting a rice paper membrane to be the original carrier (10).

16. The producing method in any of the preceding claims, wherein the producing material is a liquid material, and the step e) comprises dripping the producing material on the original carrier (10) for the producing material to be absorbed by a surface of the original carrier (10).

17. The producing method in any of the preceding claims, wherein the step c) comprises selecting a single flavor brought by the target wine (2) itself.

18. The producing method in any of the preceding claims, wherein the step c) comprises selecting a single flavor brought by the target wine (2) at a specific time point or a specific position in the mouth after drinking.

19. The producing method in any of the preceding claims, wherein the step c) comprises selecting a flavor of a food that is pairing with the target wine (2).

20. The producing method in any of the preceding claims, wherein the original carrier (60) is physically divided into at least two tasting areas (61), and an quantity of the flavors selected in the step c) is same as an quantity of the tasting areas (61), and the step d) comprises obtaining multiple of the producing materials that are respectively corresponding to multiple of the flavors being selected, and the step e) comprises attaching each of the producing materials respectively to one of the tasting areas (61) of the original carrier (60).

## Amended claims

### Amended claims in accordance with Rule 137(2) EPC.

1. A carrier set for alcohol tasting, corresponding to multiple flavors brought by a chosen alcohol, comprising:
a plurality of alcohol tasting carriers (1), each respectively comprising an original carrier (10) that is a carrier does not bring any special flavor; and
multiple alcohol tasting carrier producing materials, each respectively attached on one of the original carriers (10) to form one of the plurality of alcohol tasting carriers (1),
**characterized in that** the total amount of the plurality of alcohol tasting carriers (1) equals to the amount of the multiple flavors brought by the chosen alcohol, the total amount of the plurality of producing materials equals to the amount of the multiple flavors brought by the chosen alcohol, and each of the plurality of producing materials respectively provides one of the multiple flavors.

2. The carrier set for alcohol tasting in claim 1, wherein the original carrier (10) is a rice paper membrane.

3. The carrier set for alcohol tasting in any of the preceding claims, wherein the plurality of producing materials are liquid materials.

4. A alcohol tasting carrier (6), corresponding to multiple flavors brought by a chosen alcohol, comprising:
an original carrier (60) bringing no special flavor, physically divided into two or more than two tasting areas (61); and
multiple producing materials, each of the producing materials being respectively attached on one of the tasting areas (61) and providing different flavor (7) corresponding to a chosen alcohol (2),
**characterized in that** an arrangement order of the multiple producing materials and each corresponding one of the tasting areas (61) on the original carrier (60) is consistent with a change order in the taste of the chosen alcohol at different points or different positions in the mouth after drinking.

5. The alcohol tasting carrier in claim 4, wherein the original carrier (60) is a rice paper membrane.

6. The alcohol tasting carrier in any of the preceding claims, wherein the multiple producing materials are liquid materials.

7. The alcohol tasting carrier in any of the preceding claims, wherein the original carrier (60) comprises physical cutting lines (62) to divide the original carrier (60) into the multiple tasting areas (61).

8. The alcohol tasting carrier in any of the preceding claims, wherein a first tasting area (61) or a last tasting area (61) of the original carrier (60) is a smelling area (63), and an odor (8) of the chosen alcohol (2) is sealed in the smelling area (63) through a sealing film (64), and the odor (8) is released when the sealing film (64) is torn off the smelling area (63).

9. A producing method of alcohol tasting carrier, corresponding to multiple flavors brought by a chosen alcohol, comprising:
a) obtaining an original carrier (10), wherein the original carrier (10) is a carrier that does not bring any special flavor;
b) selecting the chosen alcohol (2) bringing the multiple flavors;
c) selecting one of the multiple flavors corresponding to the chosen alcohol(2);
d) obtaining a producing material corresponding to the flavor (11) selected in the step c);
and
e) attaching the producing material being obtained to the original carrier (10) to transform the original carrier (10) into an alcohol tasting carrier (1) having the flavor (11) selected in the step c); **characterized in that** further comprising:
f) re-executing step a) to step e) to produce multiple alcohol tasting carriers (1) until a producing procedure for multiple of the alcohol tasting carriers (1) corresponding to the chosen alcohol is completed, wherein the total amount of the multiple alcohol tasting carriers (1) equals to the amount of the multiple flavors brought by the chosen alcohol, the total amount of the producing materials equals to the amount of the multiple flavors brought by the chosen alcohol, and each of the producing materials respectively provides one of the multiple flavors.

10. The producing method in claim 9, wherein the step a) comprises selecting a rice paper membrane to be the original carrier (10).

11. The producing method in any of the preceding claims, wherein the producing material is a liquid material, and the step e) comprises dripping the producing material on the original carrier (10) for the producing material to be absorbed by a surface of the original carrier (10).

12. The producing method in any of the preceding claims, wherein the original carrier (60) is physically divided into at least two tasting areas (61), and an quantity of the flavors selected in the step c) is same as an quantity of the tasting areas (61), and the step d) comprises obtaining multiple of the producing materials that are respectively corresponding to multiple of the flavors being selected, and the step e) comprises attaching each of the producing materials respectively to one of the tasting areas (61) of the original carrier (60).
